# EUROPEAN PATENT SPECIFICATION

(11) **EP 0 901 218 B1**
(45) Date of publication and mention of the grant of the patent: **21.12.2005**
(21) Application number: 98307247.1
(22) Date of filing: 08.09.1998
(51) Int. Cl.: H02P 9/04, H02P 9/08

(54) **Turbogenerator/motor controller**
Regler für Turbogenerator/Motor
Régulateur pour turbogénérateur/moteur

(30) Priority: 08.09.1997 US 924966; 05.01.1998 US 3078
(43) Date of publication of application: 10.03.1999
(73) Proprietor: CAPSTONE TURBINE CORPORATION, Tarzana, California 91356 (US)
(72) Inventor: Geis, Everett R., Trabuco Canyon, CA 92679 (US); Peticolas, Brian W., Redondo Beach, CA 90277 (US); Wacknov, Joel B., Monrovia, CA 91016 (US)
(74) Representative: Milhench, Howard Leslie

(56) References cited:
- EP-A- 0 679 800
- EP-A- 0 837 231
- US-A- 4 119 861
- US-A- 4 841 216
- US-A- 4 862 009
- US-A- 5 559 421

## Description

### TECHNICAL FIELD

This invention relates to the general field of power converting systems and more particularly to an improved controller for a turbogenerator/motor.

### BACKGROUND OF THE INVENTION

Electric utilities are now grappling with the challenge of deregulation and competition at a time of relatively slow growth in electricity demands. While plans for huge power plants are being shelved because of high costs and environmental concerns, new customers must still be supplied with electrical power. Existing plants and transmission lines are simply becoming overwhelmed in some areas. Nuclear power plants are fast becoming economic dinosaurs.

One alternative to generating electrical power is called a "turbogenerator", a small gas turbine engine combined on a common shaft with an electric generator. When a permanent magnet generator/motor is utilized, the combination is referred to as a permanent magnet turbogenerator/motor.

Intake air is drawn through the permanent magnet turbogenerator/motor by the gas turbine compressor which increases the pressure of the air and forces it into a recuperator which receives exhaust gases from the gas turbine. The recuperator preheats the air before it enters the gas turbine combustor where the preheated air is mixed with fuel and burned. The combustion gases are then expanded in the turbine which drives the compressor and the permanent magnet rotor of the permanent magnet turbogenerator/motor is mounted on the same shaft as the gas turbine and compressor. The expanded turbine exhaust gases are then passed through the recuperator before being discharged from the turbogenerator/motor.

A permanent magnet turbogenerator/motor generally includes a rotor assembly having a plurality of equally spaced magnet poles of alternating polarity around the outer periphery of the rotor or, in more recent times, a solid structure of samarium cobalt or neodymium-iron-boron. The rotor is rotatable within a stator which generally includes a plurality of windings and magnetic poles of alternating polarity. In a generator mode, rotation of the rotor causes the permanent magnets to pass by the stator poles and coils and thereby induces an electric current to flow in each of the coils. Alternately, if an electric current is passed through the stator coils, the energized coils will cause the rotor to rotate and thus the generator will perform as a motor. As high-energy product permanent magnets having significant energy increases have become available at reduced prices, the utilization of the permanent magnet turbogenerator/motors has increased. The use of such high-energy product permanent magnets permits increasingly smaller machines capable of supplying increasingly higher power outputs.

A permanent magnet turbogenerator/motor can be utilized to provide electrical power for a wide range of utility, commercial and industrial applications. While an individual permanent magnet turbogenerator may only generate 24 to 50 kilowatts, powerplants of up to 500 kilowatts or greater are possible by linking numerous permanent magnet turbogenerator/motors together. Standby power, peak load shaving power and remote location power are just several of the potential utility applications which these lightweight, low noise, low cost, environmentally friendly, and thermally efficient units can be useful for.

In order to meet the stringent utility requirements, particularly when the permanent magnet turbogenerator/motor is to operate as a supplement to utility power, precise control of the permanent magnet turbogenerator/motor is required.

US-A-559 421 discloses a method of controlling a permanent magnet turbogenerator/motor comprising the steps of:
providing electrical power to the permanent magnet turbogenerator/motor through an inverter to start the permanent magnet turbogenerator/motor to achieve self-sustaining operation; and
disconnecting the electrical power from the inverter once self-sustaining operation is achieved.

### Summary of the Invention

The invention provides a method of controlling a permanent magnet turbogenerator/motor comprising the steps of:
providing electrical power to the permanent magnet turbogenerator/motor through an inverter to start the permanent magnet turbogenerator/motor to achieve self-sustaining operation; and
disconnecting the electrical power from the inverter once self-sustaining operation is achieved; characterised by
reconfiguring the inverter to supply voltage from the permanent magnet turbogenerator/motor after said step of disconnecting the electrical power from the inverter.

The invention also includes a controller for a permanent magnet turbogenerator/motor, comprising:
an inverter operably associated with said permanent magnet turbogenerator/motor; and
connecting means for selectively connecting electrical power to said permanent magnet turbogenerator/motor through said inverter to start said permanent magnet turbogenerator/motor to achieve self-sustaining operation; characterised by
means to reconfigure said inverter to supply voltage from said permanent magnet turbogenerator/motor when, in use, said connecting means has disconnected the electrical power from the inverter.

### BRIEF DESCRIPTION OF THE DRAWINGS

Having thus described the present invention in general terms, reference will now be made to the accompanying drawings in which:
Figure 1 is a perspective view, partially cut away, of a permanent magnet turbogenerator/motor utilizing the controller of the present invention;
Figure 2 is a functional block diagram of the interface between the permanent magnet turbogenerator/motor of Figure 1 and the controller of the present invention;
Figure 3 is a functional block diagram of the permanent magnet turbogenerator/motor controller of the present invention;
Figure 4 is a circuit diagram of the PWM inverter of the permanent magnet turbogenerator/motor controller of the present invention;
Figure 5 is a functional block diagram similar to Figure 2 and showing the provision of an energy storage and discharge system according to an alternative embodiment of the present invention; and
Figure 6 is a functional block diagram similar to Figure 3 and showing details of the energy storage and discharge system.

### DETAILED DESCRIPTION OF THE PREFERRED EMBODIMENTS

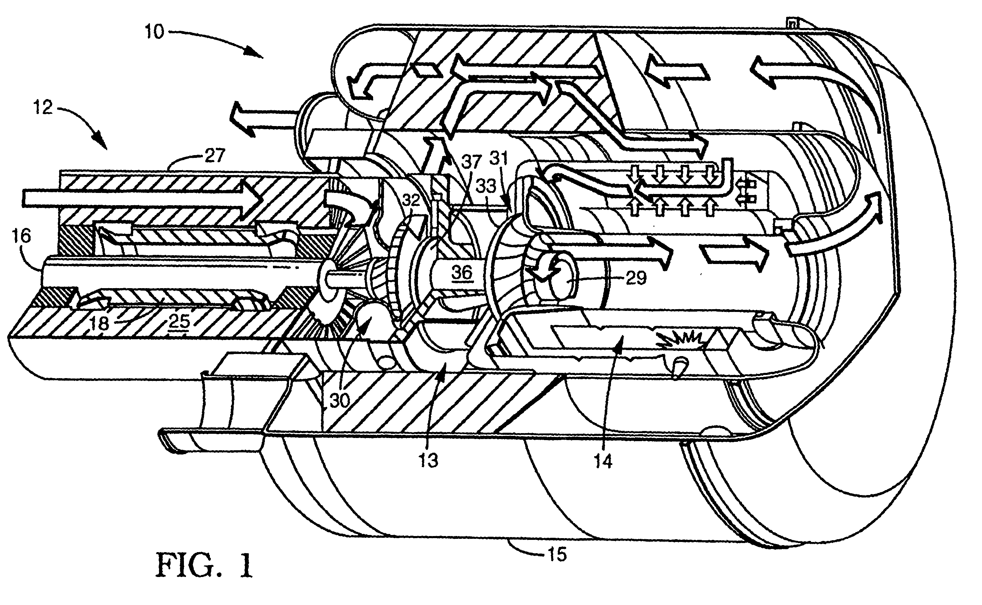

A permanent magnet turbogenerator/motor 10 is illustrated in Figure 1. The permanent magnet turbogenerator/motor 10 generally comprises a permanent magnet generator 12, a power head 13, a combustor 14 and a recuperator (or heat exchanger) 15.

The permanent magnet generator 12 includes a permanent magnet rotor or sleeve 16, having a permanent magnet disposed therein, rotatably supported within a permanent magnet stator 18 by a pair of spaced journal bearings. Radial permanent magnet stator cooling fins 25 are enclosed in an outer cylindrical sleeve 27 to form an annular air flow passage which cools the permanent magnet stator 18 and thereby preheats the air passing through on its way to the power head 13.

The power head 13 of the permanent magnet turbogenerator/motor 10 includes compressor 30, turbine 31, and bearing rotor 36 through which the tie rod 29 passes. The compressor 30, having compressor impeller or wheel 32 which receives preheated air from the annular air flow passage in cylindrical sleeve 27 around the permanent magnet stator 18, is driven by the turbine 31 having turbine wheel 33 which receives heated exhaust gases from the combustor 14 supplied with air from recuperator 15. The compressor wheel 32 and turbine wheel 33 are rotatably supported by bearing shaft or rotor 36 having radially extending bearing rotor thrust disk 37. The bearing rotor 36 is rotatably supported by a single journal bearing within the center bearing housing while the bearing rotor thrust disk 37 at the compressor end of the bearing rotor 36 is rotatably supported by a bilateral thrust bearing. The bearing rotor thrust disk 37 is adjacent to the thrust face at the compressor end of the center bearing housing while a bearing thrust plate is disposed on the opposite side of the bearing rotor thrust disk 37 relative to the center housing thrust face.

Intake air is drawn through the permanent magnet generator 12 by the compressor 30 which increases the pressure of the air and forces it into the recuperator 15. In the recuperator 15, exhaust heat from the turbine 31 is used to preheat the air before it enters the combustor 14 where the preheated air is mixed with fuel and burned. The combustion gases are then expanded in the turbine 31 which drives the compressor 30 and the permanent magnet rotor 16 of the permanent magnet generator 12 which is mounted on the same shaft as the turbine 31. The expanded turbine exhaust gases are then passed through the recuperator 15 before being discharged from the turbogenerator/motor 10.

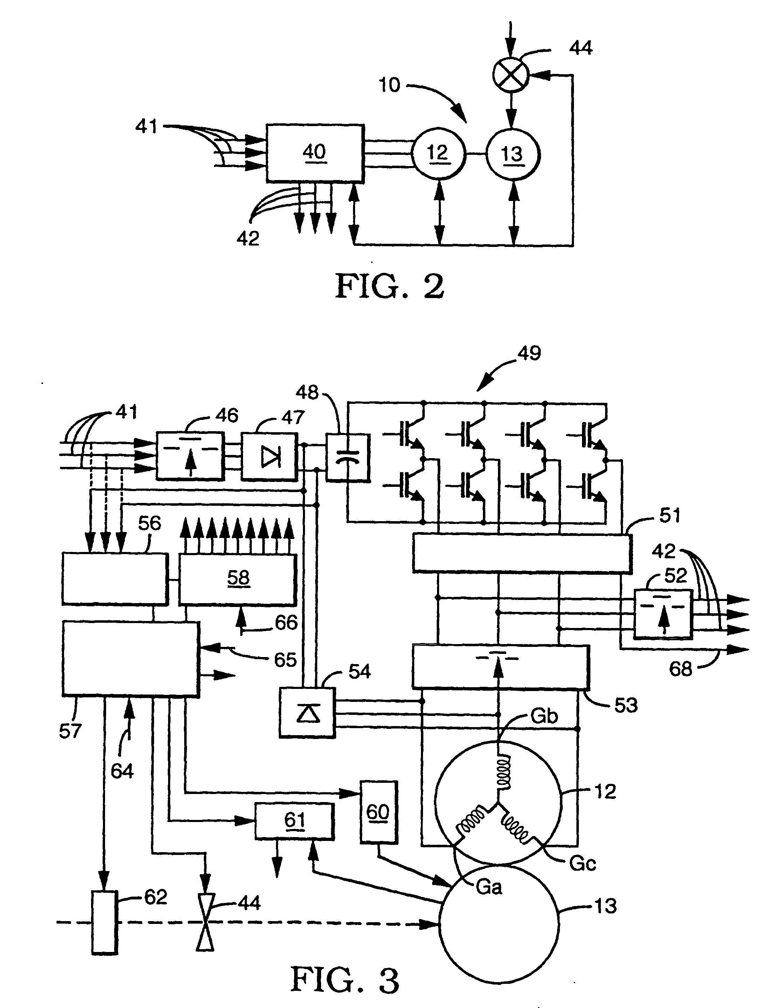

A functional block diagram of the interface between the generator controller 40 and the permanent magnet turbogenerator/motor 10 for stand alone operation is illustrated in Figure 2. The generator controller 40 receives power 41 from a source such as a utility to operate the permanent magnet generator 12 as a motor to start the turbine 31 of the power head 13. During the start sequence, the utility power 41 is rectified and a controlled frequency ramp is supplied to the permanent magnet generator 12 which accelerates the permanent magnet rotor 16 and the compressor wheel 32, bearing rotor 36 and turbine wheel 33. This acceleration provides an air cushion for the air bearings and airflow for the combustion process. At about 12,000 rpm, spark and fuel are provided and the generator controller 40 assists acceleration of the turbogenerator 10 up to about 40,000 rpm to complete the start sequence. The fuel control valve 44 is also regulated by the generator controller 40.

Once self sustained operation is achieved, the generator controller 40 is reconfigured to produce 60 hertz, three phase AC (208 volts) 42 from the rectified high frequency AC output (280-380 volts) of the high speed permanent magnet turbogenerator 10. The permanent magnet turbogenerator 10 is commanded to a power set-point with speed varying as a function of the desired output power. For grid connect applications, output 42 is connected to input 41, and these terminals are then the single grid connection.

The functional blocks internal to the generator controller 40 are illustrated in Figure 3. The generator controller 40 includes in series the start power contactor 46, rectifier 47, DC bus capacitors 48, pulse width modulated (PWM) inverter 49, AC output filter 51, output contactor 52, generator contactor 53, and permanent magnet generator 12. The generator rectifier 54 is connected from between the rectifier 47 and bus capacitors 48 to between the generator contactor 53 and permanent magnet generator 12. The AC power output 42 is taken from the output contactor 52 while the neutral is taken from the AC filter 51.

The control logic section consists of control power supply 56, control logic 57, and solid state switched gate drives illustrated as integrated gate bipolar transistor (IGBT) gate drives 58, but may be any high speed solid state switching device. The control logic 57 receives a temperature signal 64 and a current signal 65 while the IGBT gate drives 58 receive a voltage signal 66. The control logic 57 sends control signals to the fuel cutoff solenoid 62, the fuel control valve(s) 44 (which may be a number of electrically controlled valves), the ignitor 60 and release valve 61. AC power 41 is provided to both the start power contactor 46 and in some instances directly to the controller power supply 56 in the control logic section of the generator control 40 as shown in dashed lines.

Utility start power 41, (for example, 208AC voltage, 3 phase, 60 hertz), is connected to the start power contactor 46 through fuses (not shown). The start power contactor 46 may consist of a first normally open relay and a second normally closed relay, both of which are de-energized at start up. Alternately, both relays may be normally open and the control power supply 56 receives input directly from utility power input 41. Flameproof power resistors can parallel the relays to provide a reduced current (approximately 10 amps maximum) to slowly charge the internal bus capacitors 48 through the rectifier 47 to avoid drawing excessive inrush current from the utility.

Once the bus capacitors 48 are substantially charged, (to approximately 180 VDC, or 80% of nominal), the control power supply 56 starts to provide low voltage logic levels to the control logic 57. Once the control logic microprocessor has completed self tests, coil power is provided to first normally open relay of the start power contactor 46 to fully charge the bus capacitors 48 to full peak line voltage. The bus capacitors 48 can be supplemented for high frequency filtering by additional film type (dry) capacitors.

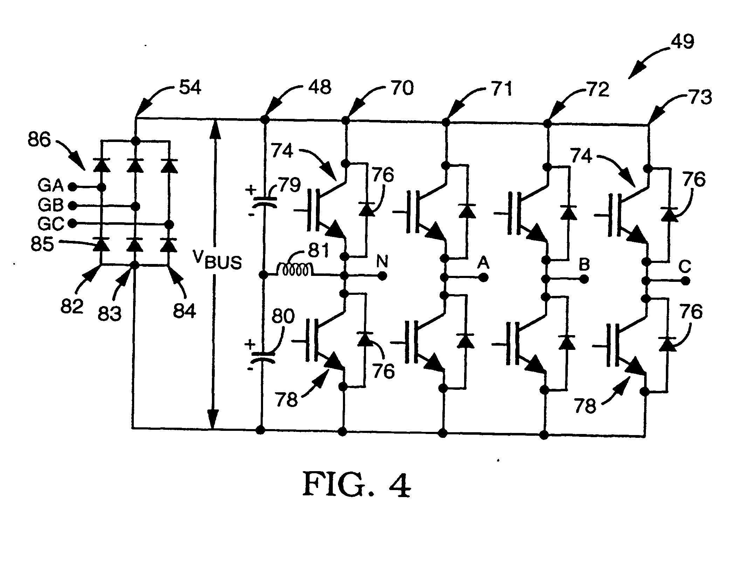

The PWM inverter 49 is illustrated in more detail in Figure 4. This inverter 49 illustrates four IGBT channels 70, 71, 72, and 73 each across the voltage bus V_{bus} but as stated previously, these channels may be any number or type of solid state switching devices. Each IGBT channel 70, 71, 72 and 73 includes an upper IGTB 74 and an anti parallel diode 76 and a lower IGBT 78 and an identical anti parallel diode 76.

The PWM inverter 49 also includes a capacitor channel 48 across the voltage bus V_{bus}. The capacitor channel 48 includes upper capacitor 79 and lower capacitor 80 with the midpoint between upper capacitor 79 and lower capacitor 80 connected to the midpoint of IGBT channel 70 through inductor 81. The neutral connection N or 68 is at the midpoint of IGBT channel 70 while the midpoints of IGBT channels 71, 72, and 73 provide output connections A, B, and C, respectively of output 42. The neutral connection N or 68 may not be required for all applications.

In addition, the PWM inverter 49 includes a rectifier block channel 54 which is also across the voltage bus V_{bus}. This rectifier block channel 54 includes a three phase rectifier block 86 having three (3) diode channels 82, 83, and 84 each including a pair of diodes 85. The midpoints of each pair of diodes 85 are connected to generator windings G_{A}, G_{B}, and G_{C}, respectively.

The control logic 57 sequentially drives the IGBT switches of the PWM inverter 49 via the IGBT gate drives 58. Six of the IGBT switches, those in channels 71, 72 and 73 are operated at a high frequency and modulated in classic PWM manner to provide sinusoidal output via the AC output filter 51. The other 2 IGBT switches of the PWM inverter 49, both in channel 70, are switched at a 50% duty cycle to create an artificial neutral 68 and balancing the voltage on the pair of capacitors 79 and 80. The current in the neutral 68 will consist of a relatively small, high frequency, triangle pulse, plus whatever 60 hertz component exists as a result of unbalanced load currents in the 60 hertz generator mode.

The PWM inverter 49 operates in two basic modes: a variable voltage (0-190 V line to line), variable frequency (0-700 hertz) constant volts per hertz, three phase mode to drive the permanent magnet generator/motor 12 for start up or cooldown when the generator contactor 52 is closed; or a constant voltage (120 V line to neutral per phase), constant frequency three phase 60 hertz mode. The control logic 57 and IGBT gate drives 58 receive feedback via current signal 65 and voltage signal 66, respectively, as the turbine generator is ramped up in speed to complete the start sequence. The PWM inverter 49 is then reconfigured to provide 60 hertz power, either as a current source for grid connect, or as a voltage source.

The AC filter 51 consists of three iron core inductors and three capacitors to remove the high frequency switching component. The nominal current for each AC filter inductor will be fundamental load current at 60 hertz, plus a small high frequency component. The output of the AC filter 51 is connected to the load via the output contactor 52 when the PWM inverter 49 is in 60 hertz output mode. The output contactor 52 is energized from the output of the PWM inverter 49 via a relay.

The generator contactor 53 connects the permanent magnet generator 12 to the inverter 49 during the start sequence. Initial starting current approximates nominal operating current for about 2 seconds then reduces to a lower value for the balance of the acceleration period. After the start sequence is completed, the generator 12 produces enough output voltage at the output terminals of the generator rectifier 54 to provide three phase regulated output from the inverter 49, so both the start contactor 46 and generator contractor are opened and the system is then self sustaining.

The IGBT gate drives 58 have five sections, four identical gate drive circuits with one for each of the four dual IGBT's and another section consisting of precision resistive (fixed impedance) voltage dividers with integrated circuit amplifiers. Each gate drive section consists of two transformer isolated power supplies driven from a logic level high frequency (~50 kilohertz) driver circuit, two integrated solid state driver circuits and additional optical isolators. One circuit operates referenced to the center point of the two IGBT transistors and the other operates referenced to the negative bus potential. There are two axial lead high voltage diodes which provide "on-state" sensing, and signal control circuits in the event that the associated semiconductor switching device reflects an "on-state" voltage greater than about 10 volts.

The precision resistive divider circuits consist of two metal film type fixed resistors connected in series. A low resistive element provides the low voltage pick-off point, as an example, the inverter output sensor is typically a ~40 to 1 divider for the 120 V RMS inverter output voltage, providing a low voltage reference signal at the junction of the precision resistive divider circuits. This signal is buffered by a solid state operational amplifier. In the event one of the high voltage resistors were to fail shorted, the other is capable of standing off the voltage and preventing component damage and/or hazardous conditions from occurring at other locations within the control logic 57.

The control power supply 56 is really a two stage power converter. The first stage, consisting of semiconductors and related components, is a 400 VDC to 24 VDC isolated converter. The isolation is a function of the transformer and optically isolated components which link the high voltage side components with the 24 VDC regulated side. The second stage, also consisting of semiconductors and related components, is a 24 VDC to ± 12VDC, 12 VDC, and 5 VDC isolated converter. As with the first stage, the isolation is a function of the transformer and optically coupled sensors.

During startup of the permanent magnet turbogenerator/motor 10, both the start power contactor 46 and the generator contactor 53 are closed and the output contactor 52 is open. Once self sustained operation is achieved, the start power contactor 46 and the generator contactor 53 are opened and the PWM inverter 49 is reconfigured to a controlled 60 hertz mode. After the reconfiguration of the PWM inverter 49, the output contactor 52 is closed to connect the AC output 42. The start power contactor 46 and generator contactor 53 will remain open.

The PWM inverter 49 is truly a dual function inverter which is used both to start the permanent magnet turbogenerator/motor 10 and is also used to convert the permanent magnet turbogenerator/motor output to utility power, either sixty hertz, three phase for stand alone applications, or as a current source device. With start power contactor 46 closed, single or three phase utility power is brought through the start power contactor 46 to be able to operate into a bridge rectifier 47 and provide precharged power and then start voltage to the bus capacitors 48 associated with the PWM inverter 49. This allows the PWM inverter 49 to function as a conventional adjustable speed drive motor starter to ramp the permanent magnet turbogenerator/motor 10 up to a speed sufficient to start the gas turbine 31.

An additional rectifier 54, which operates from the output of the permanent magnet turbogenerator/motor 10, accepts the three phase, up to 380 volt AC from the permanent magnet generator /motor 12 which at full speed is 1600 hertz and is classified as a fast recovery diode rectifier bridge. Six diode elements arranged in a classic bridge configuration comprise this high frequency rectifier 54 which provides output power at DC. The rectified voltage is as high as 550 volts under no load.

The permanent magnet turbogenerator/motor 10 is basically started at zero frequency and rapidly ramps up to approximately 12,000 rpm. This is a two pole permanent magnet generator/motor 12 and as a result 96,000 rpm equals 1,600 hertz. Therefore 12,000 rpm is 1/8th of that or 200 hertz. It is operated on a constant volt per hertz ramp, in other words, the voltage that appears at the output terminals is 1/8th of the voltage that appears at the output terminals under full speed.

Approximate full speed voltage is 380 volts line to line so it would be approximately 1/8th of that. When the PWM inverter 49 has brought the permanent magnet turbogenerator/motor 10 up to speed, the fuel solenoid 62, fuel control valve 44 and ignitor 60 cooperate to allow the combustion process to begin. Using again the adjustable speed drive portion capability of the PWM inverter 49, the permanent magnet turbogenerator/motor 10 is then accelerated to approximately 35,000 or 40,000 rpm at which speed the gas turbine 31 is capable of self sustaining operation.

The AC filter 51 is a conventional single pass LC filter which simply removes the high frequency, in this case approximately twenty kilohertz, switching component. Because the voltage in start mode is relatively low, its rectified 208 volt line which is approximately 270 volts, a single bus capacitor 48 is capable of standing that voltage. However, when in generate mode, the DC output of the generator rectifier 54 can supply voltages as high as 550 volts DC, requiring two capacitors to be series connected to sustain that voltage.

The two IGBTs 74 and 78 in IGBT channel 70 function in the generate mode to form a constant duty fifty percent duty cycle divider to maintain exactly half bus voltage at the center tap at all times. That center tap point forms the neutral for the AC output. The neutral is not required for generator starting but is required for utility interface. The IGBT channels 71, 72, and 73 form a classic six transistor PWM inverter.

The reconfiguration or conversion of the PWM inverter 49 to be able to operate as a current source synchronous with the utility grid is accomplished by first stopping the PWM inverter 49. The AC output or the grid connect point is monitored with a separate set of logic monitoring to bring the PWM inverter 49 up in a synchronized fashion. The generator contactor 53 functions to close and connect only when the PWM inverter 49 needs to power the permanent magnet turbogenerator/motor 10 which is during the start operation and during the cool down operation. The output contactor 52 is only enabled to connect the PWM inverter 49 to the grid once the PWM inverter 49 has synchronized with grid voltage.

The implementation of the control power supply 56 first drops the control power supply 56 down to a 24 volt regulated section to allow an interface with a battery or other control power device. The control power supply 56 provides the conventional logic voltages to both the IGBT gate drives 58 and control logic 57. The IGBT gate drives 58 have two isolated low voltage sources to provide power to each of the two individual IGBT drives and the interface to the IGBT transistors is via a commercially packaged chip.

This system is also capable of generating 480 volt output directly. By changing the winding in the permanent magnet turbogenerator/motor 12, the voltage ratings of the IGBTs, and the bus capacitors 48, the system is then capable of operating directly at 480 volts, starting from grid voltage with 480 volts, and powering directly to 480 volts without requiring a transformer.

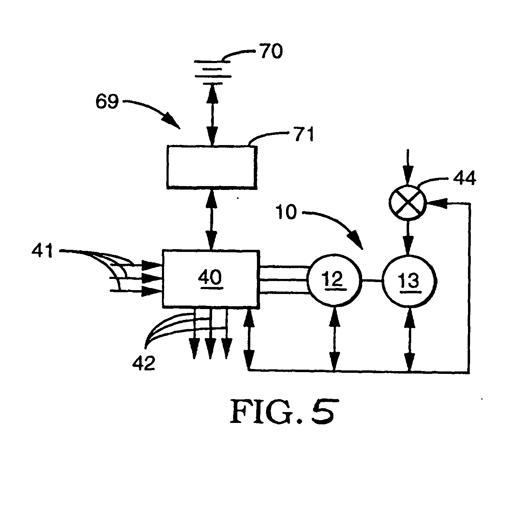

Referring to Figure 5, this shows an embodiment wherein the generator controller 40 also includes an energy storage and discharge system 69 having an ancillary electric storage device 70 which is connected through control electronics 71. This connection is bi-directional in that electrical energy can flow from the ancillary electric storage device 70 to the generator controller 40, for example during turbogenerator/motor start-up, and electrical energy can also be supplied from the turbogenerator/motor controller 40 to the ancillary electric storage device 70 during sustained operation.

While the ancillary electric energy device 70 is schematically illustrated as an electric storage battery, other electric energy storage devices can be utilized. By way of example, these would include flywheels, high energy capacitors and the like.

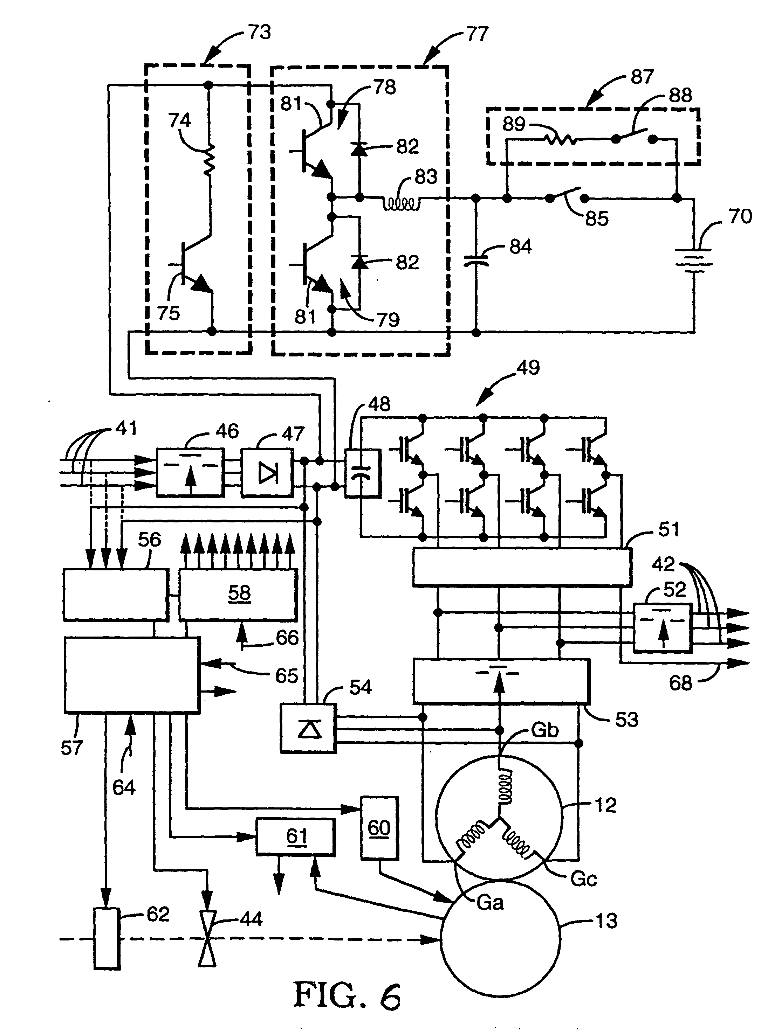

The energy storage and discharge system 69 is more particularly shown in Figure 6 and is connected to the controller 40 across the voltage bus V_{bus} between the rectifier 47 and DC bus capacitor 48 together with the generator rectifier 43. The energy storage and discharge system 69 includes an off-load device 73 and ancillary energy storage and discharge switching devices 77 both connected across voltage bus V_{bus}.

The off-load device 73 includes an off-load resistor 74 and an off-load switching device 75 in series across the voltage bus V_{bus}. The ancillary energy storage and discharge switching device 77 comprises a charge switching device 78 and a discharge switching device 79, also in series across the voltage bus V_{bus}. Each of the charge and discharge switching devices 78, 79 include a solid state switched gate drive 81, shown as an integrated gate bipolar transistor (IGBT) gate drive and an anti-parallel diode 82. Capacitor 84 and ancillary storage and discharge device 70, illustrated as a battery, are connected across the discharge switching device 79 with main power relay 85 between the capacitor 84 and the ancillary energy storage and discharge device 70. Inductor 83 is disposed between the charge switching device 78 and the capacitor 84. A precharge device 87, consisting of a precharge relay 88 and precharge resistor 89, is connected across the main power relay 85.

The off-load device 73, including off-load resistor 74 and off-load switching device 75 can absorb thermal energy from the turbogenerator 10 when the load terminals are disconnected, either inadvertently or as the result of a rapid change in load. The off-load switching device 75 will turn on proportionally to the amount of off-load required and essentially will provide a load for the gas turbine 31 while the fuel is being cut back to stabilize operation at a reduced level. The system serves as a dynamic brake with the resistor connected across the DC bus through an IGBT and serves as a load on the gas turbine during any overspeed condition.

In addition, the ancillary electric storage device 70 can continue motoring the turbogenerator 10 for a short time after a shutdown in order to cool down the turbogenerator 10 and prevent the soak back of heat from the recuperator 15. By continuing the rotation of the turbogenerator 10 for several minutes after shutdown, the power head 13 will keep moving air and sweep heat away from the permanent magnet generator 12. This keeps heat in the turbine end of the power head 13 where it will not be a problem.

The battery switching devices 77 are a dual path since the ancillary electric storage device 70 is bi-directional operating from the generator controller 40. The ancillary electric storage device 70 can provide energy to the power inverter 49 when a sudden demand or load is required and the gas turbine 31 is not up to speed. At this point, the battery discharge switching device 79 turns on for a brief instant and draws current through the inductor 83. The battery discharge switching device 79 is then opened and the current path continues by flowing through the diode 82 of the battery charge switching device 78 and then in turn provides current into the inverter capacitor 48.

The battery discharge switching device 79 is operated at a varying duty cycle, high frequency, rate to control the amount of power and can also be used to initially ramp up the controller 40 for battery start operations. After the system is in a stabilized, self sustaining condition, the battery charge switching device 78 is used exactly in the opposite. At this time, the battery charge switching device 78 periodically closes in a high frequency modulated fashion to force current through inductor 83 and into capacitor 84 and then directly into the ancillary electric storage device 70.

The capacitor 84, connected to the ancillary electric storage device 70 via the precharge relay 88 and resistor 89 and the main power relay 85, is provided to isolate the ancillary electric storage device 70 when it is in an off-state. The normal, operating sequence is that the precharge relay 88 is momentarily closed to allow charging of all of the capacitive devices in the entire system and then the main power relay 85 is closed to directly connect the ancillary electric storage device 70 with the control electronics 71. while the main power relay 85 is illustrated as a switch, it may also be a solid state switching device.

The ancillary electric storage device 70 is utilized to supplement the gap between the gas turbine 31 coming up to a steady state condition and the requirements of the inverter 49 to supply load. The energy required to support the load is that energy interval between the thermal response time of the gas turbine 31 and the load requirement, which in terms of actual stored energy is relatively small. During an off-load, the energy is dissipated resistively, and simultaneously with that command the fuel flow is cut to a minimum allowable level to sustain combustion in the gas turbine 31 but allow a maximum off-load of power.

Another advantage of this system is that it can be operated in a grid parallel fashion supporting a protective load. It will allow the combination of the ancillary electric storage device 70 and the inverter 49 to support a load in the sudden removal of utility power and allow a specific load to be protected in much the same manner that an "uninterruptable power system" protects a critical load.

In the embodiments, in order to start the turbogenerator, electric current is supplied to the stator coils of the permanent magnet generator/motor to operate the permanent magnet turbogenerator/motor as a motor and thus to accelerate the gas turbine of the turbogenerator. During this acceleration, spark and fuel are introduced in the correct sequence to the combustor and self sustaining gas turbine conditions are reached.

More particularly, the turbogenerator/motor controller of the embodiments includes a microprocessor based inverter having multiple modes of operation. To start the turbine, the inverter connects to and supplies fixed current, variable voltage, variable frequency, AC power to the permanent magnet turbogenerator/motor, driving the permanent magnet turbogenerator/motor as a motor to accelerate the gas turbine. During this acceleration, spark and fuel are introduced in the correct sequence, and self sustaining gas turbine operating conditions are reached.

At this point, the inverter is disconnected from the permanent magnet turbogenerator/motor, reconfigured to a controlled 60 hertz mode, and then either supplies regulated 60 hertz three phase voltage to a stand alone load or phase locks to the utility, or to other like controllers, to operate as a supplement to the utility. In this mode of operation, the power for the inverter is derived from the permanent magnet turbogenerator/motor via high frequency rectifier bridges. The microprocessor monitors turbine conditions and controls fuel flow to the gas turbine combustor.

Since the voltage derived from the permanent magnet turbogenerator/motor is a function of rotational speed and the load, inverter input voltage requirements limit the operational speed of the gas turbine from approximately 72,000 rpm to a top speed of 96,000 rpm. The inverter is directly coupled to the utility, therefor the inverter voltage rating is established by the utility for grid connect operation, and has a narrow range for stand alone operation.

A further problem arises in that a gas turbine inherently is an extremely limited thermal machine from a standpoint of its ability to change rapidly from one load state to a different load state. In terms of accepting an increased loading, the gas turbine has a limited capability of adding probably two (2) kilowatts per second; in other words, being able to accept full load in a fifteen (15) second period. The reality for stand-alone systems is that the application of load occurs in approximately one one-thousand of a second. In terms of off loading, the gas turbine has similar limitations if there is a rapid off-loading of power. When operating in a self sustained manner, the gas turbine has a very large amount of stored energy, primarily stored in the form of heat in the associated recuperator. If the load were removed from the gas turbine, this stored energy would tend to overspeed the turbine.

To overcome or substantially reduce this further problem, in the second embodiment an energy storage and discharge system is provided which includes an ancillary electric storage device, such as a battery, connected to the generator controller through control electronics. Electrical energy can flow from the ancillary electric storage device to the turbogenerator controller during start up and increasing load and vice versa during self sustained operation of the turbogenerator.

When utility power is unavailable, the ancillary electric storage device can provide the power required to start the turbogenerator. When a load transient occurs, the gas turbine engine and the ancillary electric storage device provide the power required to successfully meet the transient. The output power control regulates a constant AC voltage and any load placed on the output will immediately require more power to maintain the same level of AC voltage output. As this occurs, the internal DC bus will immediately start to droop and the response to this droop is performed by the ancillary electric storage device controls which draws current out of the device to regulate the DC bus voltage. As turbogenerator system power output increases, the gas turbine engine controls respond by commanding the gas turbine engine to a higher speed. In this configuration, power demand equals power output and once the gas turbine engine output exceeds the system output, the ancillary electric storage device no longer supplies energy but rather starts to draw power from the DC bus to recharge itself.

## Claims

1. A method of controlling a permanent magnet turbogenerator/motor comprising the steps of:
providing electrical power to the permanent magnet turbogenerator/motor (10) through an inverter (49) to start the permanent magnet turbogenerator/motor to achieve self-sustaining operation; and
disconnecting the electrical power from the inverter once self-sustaining operation is achieved; **characterised by**
reconfiguring the inverter to supply voltage from the permanent magnet turbogenerator/motor after said step of disconnecting the electrical power from the inverter.

2. The method of claim 1, wherein the voltage supplied from the permanent magnet turbogenerator/motor is utility frequency voltage.

3. The method of claim 1, wherein the electrical power provided to the permanent magnet turbogenerator/motor (10) through the inverter (49) drives the permanent magnet turbogenerator/motor as a motor to accelerate the gas turbine engine (13) of the permanent magnet turbogenerator/motor;
spark and fuel is provided to the gas turbine engine during this acceleration to achieve said self-sustaining operation; and
the inverter is reconnected to the permanent magnet turbogenerator/motor through a rectifier bridge (54) to reconfigure the inverter to supply said voltage as utility frequency voltage.

4. The method of claim 1, wherein the electrical power provided to the permanent magnet turbogenerator/motor (10) through the inverter (49) is provided to the inverter through a first contactor (46) and from the inverter (49) through a second contactor (53) to accelerate the gas turbine engine (13) of the permanent magnet turbogenerator/motor;
spark and fuel is provided to the gas turbine engine during this acceleration to achieve said self-sustaining operation;
the electrical power is disconnected from the inverter once self-sustaining operation is achieved by opening the first and second contactors (46,53); and
the inverter is reconnected to the permanent magnet turbogenerator/motor through a rectifier bridge (54) to reconfigure the inverter to supply said voltage as utility frequency voltage.

5. The method of claim 4, further comprising the step of connecting the reconfigured inverter (49) to a load by closing a third contactor (52).

6. The method of claim 1, wherein the inverter is a multiple solid state switching device channel pulse width modulated inverter (49) and the electrical power provided to the permanent magnet turbogenerator/motor (10) through the inverter is provided to the inverter through a first contactor (46) and from the inverter (49) through a second contactor (53) to drive the permanent magnet turbogenerator/motor as a motor to accelerate the gas turbine engine of the permanent magnet turbogenerator/motor;
spark and fuel is provided to the gas turbine engine during this acceleration to achieve said self-sustaining operation;
the electrical power is disconnected from the inverter once self-sustaining operation is achieved by opening the first and second contactors (46,53); and
the inverter is reconnected to the permanent magnet turbogenerator/motor through a high frequency rectifier bridge (54) to reconfigure the inverter; and
further comprising connecting the reconfigured inverter to utility power by closing a third contactor (52).

7. The method of claim 6, wherein the number of multiple solid state switching device channels in said pulse width modulated inverter (49) is four, and three of the four solid state switching device channels are reconfigured to supply utility frequency voltage and the fourth solid state switching device channels is switched at a fifty percent duty cycle to create an artificial neutral.

8. The method of claim 7, wherein the four solid state switching device channels are IGBT channels.

9. The method of claim 6, 7 or 8, wherein the high frequency rectifier bridge (54) is a three phase rectifier having three diode channels.

10. The method of claim 9, wherein each of said three diode channels include a pair of diodes.

11. The method of any one of claims 1 to 5, wherein said inverter is a pulse width modulated inverter (49).

12. The method of any one of the preceding claims, further comprising providing electrical energy to the inverter from an energy storage and discharge system (69) when utility electrical power is unavailable to start the permanent magnet turbogenerator/motor, and/or during self-sustained operation when the inverter cannot meet an instantaneous load requirement, and/or after shutdown to continue motoring the gas turbine engine (13) of the permanent magnet turbogenerator/motor to cool down the permanent magnet turbogenerator/motor and/or to otherwise store electrical energy during self-sustained operation.

13. A controller (40) for a permanent magnet turbogenerator/motor, comprising:
an inverter (49) operably associated with said permanent magnet turbogenerator/motor; and
connecting means (46,53) for selectively connecting electrical power to said permanent magnet turbogenerator/motor through said inverter to start said permanent magnet turbogenerator/motor to achieve self-sustaining operation; **characterised by**
means (54) to reconfigure said inverter to supply voltage from said permanent magnet turbogenerator/motor when, in use, said connecting means has disconnected the electrical power from the inverter.

14. The controller of claim 13, wherein said inverter is a pulse width modulated inverter (49) and includes a plurality of solid state switching device channels.

15. The controller of claim 14, wherein said plurality of solid state switching device channels in said pulse width modulated inverter (49) is four, and three of the four solid state switching device channels are reconfigured to supply utility frequency voltage and the fourth solid state switching device channels is switched at a fifty percent duty cycle to create an artificial neutral.

16. The controller of claim 15, wherein said four solid state switching device channels are IGBT channels.

17. The controller of any one of claims 13 to 16, wherein the voltage supplied from said permanent magnet turbogenerator/motor is utility frequency voltage.

18. The controller of claim 13, wherein said connecting means (46,53) connects electrical power to said permanent magnet turbogenerator/motor through said inverter (49) to drive said permanent magnet turbogenerator/motor as a motor to accelerate a gas turbine engine (13) of said permanent magnet turbogenerator/motor;
said means to reconfigure the inverter comprises a rectifier bridge (54) operably associated with said inverter and said permanent magnet turbogenerator/motor for reconfiguring said inverter to supply utility frequency voltage; and further comprising
means (44,60,62) to provide spark and fuel to said gas turbine engine during said acceleration to achieve self-sustaining operation of said gas turbine engine; and
means to connect said inverter to said permanent magnet turbogenerator/motor through said rectifier bridge.

19. The controller of claim 13, wherein:
the inverter is a pulse width modulated inverter (49) having a plurality of solid state switching device channels;
said connecting means comprises a first contactor (46) operably associated with said inverter and a second contactor (53) operably associated with said permanent magnet turbogenerator/motor, in use, electrical power being provided to said pulse width modulated inverter through said first contactor, when closed to drive said permanent magnet turbogenerator/motor as a motor through said second contactor, when closed, to accelerate a gas turbine engine (13) of said permanent magnet turbogenerator/motor, and
said means to reconfigure said inverter comprises a rectifier bridge (54) operably associated with said inverter and said permanent magnet turbogenerator/motor for reconfiguring the inverter to supply utility frequency voltage; and further comprising means to open said first and second contactors to disconnect the electrical power from said permanent magnet turbogenerator/motor once self-sustaining operation is achieved;
means (44,60,62) to provide spark and fuel to said gas turbine engine during said acceleration to achieve self-sustaining operation of said gas turbine engine;
a third contactor (52) operably associated with said inverter;
means to connect said inverter to said permanent magnet turbogenerator/motor through said rectifier bridge (54) to reconfigure said inverter; and
means to connect said reconfigured inverter to supply utility frequency voltage to a load through said third contactor when closed.

20. The controller of claim 19, wherein the number of solid state switching device channels in said inverter is four, and three of the four solid state switching device channels are reconfigured to supply utility frequency voltage and the fourth solid state switching device channel is switched at a fifty percent duty cycle to create an artificial neutral.

21. The controller of claim 20, wherein the four solid state switching device channels are IGBT channels.

22. The controller of claim 19, 20 or 21, wherein said rectifier bridge (54) is a three phase rectifier having three diode channels.

23. The controller of claim 22, wherein each of said three diode channels includes a pair of diodes.

24. The controller of any one of claims 13 to 23, further comprising an energy storage and discharge system (69) for the inverter to provide electrical energy to the inverter when utility electrical power is unavailable to start the permanent magnet turbogenerator/motor, and/or during self sustained operation when the inverter cannot meet an instantaneous load requirement, and/or after shutdown to continue motoring the gas turbine engine of the permanent magnet turbogenerator/motor to cool down the permanent magnet turbogenerator/motor and/or to otherwise store electrical energy during self sustained operation.

## Patentansprüche

1. Verfahren zum Steuern eines Permanentmagnet - Turbogenerators/Motors umfassend die Schritte:
Bereitstellen einer elektrischen Leistung zu dem Permanentmagnet-Turbogenerator/Motor (10) durch einen Umrichter (49), um den Permanentmagnet -Turbogenerator/Motor anzulassen, um einen selbständigen Betrieb zu erreichen; und
Trennen der elektrischen Leistung von dem Umrichter, sobald der selbständige Betrieb erreicht wird; **gekennzeichnet durch**
Rekonfigurieren des Umrichters zur Lieferung einer Spannung von dem Permanentmagnet -Turbogenerator/Motor nach dem Schritt des Trennens der elektrischen Leistung von dem Umrichter.

2. Verfahren nach Anspruch 1, wobei die von dem Permanentmagnet-Turbogenerator/Motor gelieferte Spannung eine Nutzfrequenz-Spannung ist.

3. Verfahren nach Anspruch 1, wobei die elektrische Leistung, die zu dem Permanentmagnet -Turbogenerator/Motor (10) durch den Umrichter (49) bereitgestellt wird, den Permanentmagnet-Turbogenerator/Motor als einen Motor antreibt, um den Gasturbi nenmotor (13) des Permanentmagnet-Turbogenerators/Motors zu beschleunigen;
während der Beschleunigung Funken und Kraftstoff zu dem Gasturbinenmotor bereitgestellt werden, um den selbständigen Betrieb zu erreichen; und
der Umrichter mit dem Permanentmag net-Turbogenerator/Motor durch eine Gleichrichterbrücke (54) zum Rekonfigurieren des Umrichters erneut verbunden wird, um die Spannung als Nutzfrequenz-Spannung zu liefern.

4. Verfahren nach Anspruch 1, wobei die elektrische Leistung, die zu dem Perman entmagnet-Turbogenerator/Motor (10) durch den Umrichter (49) bereitgestellt wird, zu dem Umrichter durch einen ersten Schaltschütz (46) und von dem Umrichter (49) durch einen zweiten Schaltschütz (53) bereitgestellt wird, um den Gas - turbinenmotor (13) des Permanentmagnet -Turbogenerators/Motors zu beschleunigen;
während dieser Beschleunigung Funken und Kraftstoff zum Gasturbinenmotor bereitgestellt werden, um den selbständigen Betrieb zu erreichen;
die elektrische Leistung durch Öffnen des ersten und des zweiten Schaltschützes (46; 53) von dem Umrichter abgetrennt wird, sobald der selbständige Betrieb erreicht wird; und
der Umrichter mit dem Permanentmagnet -Turbogenerator/Motor durch eine Gleichrichterbrücke (54) zum Rekonfigurieren des Umrichters erneut verbunden wird, um die Spannung als Nutzfrequenz-Spannung zu liefern.

5. Verfahren nach Anspruch 4, ferner umfassend den Schritt des Verbindens des rekonfigurierten Umrichters (49) mit einer Ladung durch Verschließen eines dritten Schaltschützes (52).

6. Verfahren nach Anspruch 1, wobei der Umrichter ein Umrichter (49) mit multiplen Festkörperschaltungs - kanälen mit modulierter Impulsbreite ist und die elektrische Leistung, die durch den Umrichter zu dem Permanentmagnet-Turbogenerator/Motor (10) bereitgestellt wird, durch einen ersten Schreibschütz (46) zu dem Umrichter und durch einen zweiten Schreibschütz (53) von dem Umrichter (49) bereitgestellt wird, um den Permanentmagnet - Turbogenerator/Motor als einen Motor anzutreiben, um den Gasturbinenmotor des Permanentmagnet - Turbogenerators/Motors zu beschleunigen;
während dieser Beschleunigung Funken und Kraftstoff zum Gasturbinenmotor bereitgestellt werden, um den selbständigen Betrieb zu erreichen;
die elektrische Leistung durch Öffnen des ersten und des zweiten Schaltschützes (46; 53) von dem Umrichter abgetrennt wird, sobald der selbständige Betrieb er - reicht wird; und
der Umrichter mit dem Permanentmagnet -Turbogenerator/Motor durch eine Hochfrequenz -Gleichrichterbrücke (54) wiederverbunden wird, u m den Umrichter zu re - konfigurieren; und
ferner umfassend das Verbinden des rekonfigurierten Umrichters mit der Nutzleistung durch Verschließen eines dritten Schaltschützes (52).

7. Verfahren nach Anspruch 6, wobei die Anzahl der multiplen Festkörperschaltungskanäle in dem Umrichter (49) mit modulierter Impulsbreite vier ist und drei der vier Festkörperschaltungskanäle zur Lieferung einer Nutzfrequenz-Spannung rekonfiguriert werden und der vierte Festkörperschaltungskanal bei einem fünfzigprozentigen Arbeitszyklus geschaltet wird, um einen künstlichen Nullleiter zu schaffen.

8. Verfahren nach Anspruch 7, wobei die vier Festkörperschaltungskanäle IGBT-Kanäle sind.

9. Verfahren nach Anspruch 6, 7 oder 8, wobei die Hoch - frequenz-Gleichrichterbrücke (54) ein Dreiphasen - Gleichrichter ist, der drei Diodenkanäle aufweist.

10. Verfahren nach Anspruch 9, wobei jeder der drei Diodenkanäle ein Paar Dioden aufweist.

11. Verfahren nach einem der Ansprüche 1 bis 5, wobei der Umrichter ein Umrichter (49) mit modulierter Impulsbreite ist.

12. Verfahren nach einem der vorherigen Ansprüche, umfassend das Bereitstellen elektrischer Energie zu dem Umrichter von einem Energiespeicher - und Abgabesystem (69), wenn eine elektrische Nutzleistung nicht verfügbar ist, u m den Permanentmagnet -Turbogenerator/Motor anzulassen, und/oder während des selbständigen Betriebs, wenn der Umrichter einer sofortigen Ladungsanforderung nicht entsprechen kann und/oder nach dem Abschalten zum Fortfahren mit dem Durchdrehen des Gasturbinenmotors (13) des Permanentmagnet -Turbogenerators/Motors, um den Permanentmagnet -Turbogenerator/Motor abzukühlen oder die elektrische Energie während des selbständigen Betriebs anderweitig zu speichern.

13. Steuerung (40) für einen Permanentmagnet -Turbogenerator/Motor, umfassend:
einen Umrichter (49), der betrieblich mit dem Permanentmagnet-Turbogenerator/Motor in Verbindung steht; und
Verbindungsmittel (46, 53) zum selektiven Verbinden der elektrischen Leistung mit dem Permanentmagnet - Turbogenerator/Motor durch den Umrichter zum Anlassen des Permanentmagnet -Turbogenerators/Motors, um einen selbständigen Betrieb zu erreichen; **gekennzeichnet durch**
Mittel (54) zum Rekonfigurieren des Umrichters, um eine Spannung von dem Permanentmagnet -Turbogenerator/Motor zu liefern, wenn das Verbindungsmittel während der Benutzung die elektrische Leistung von dem Umrichter abgetrennt hat.

14. Steuerung nach Anspruch 13, wobei der Umrichter ein Umrichter (49) mit modulierter Impulsbreite ist und mehrere Festkörper-Schaltungskanäle aufweist.

15. Steuerung nach Anspruch 14, wobei die Anzahl der mehreren Festkörper-Schaltungskanäle in dem Umrichter (49) mit modulierter Impulsbreite vier ist und drei der vier Festkörper -Schaltungskanäle rekonfiguriert werden, um eine Nutzfrequenz-Spannung zu liefern, und der vierte Festkörper -Schaltungskanal bei einem fünfzigprozentigen Arbeitszyklus geschaltet wird, um einen künstlichen Nullleiter zu schaffen.

16. Steuerung nach Anspruch 15, wobei die vier Festkörper-Schaltungskanäle IGBT-Kanäle sind.

17. Steuerung nach einem der Ansprüche 13 bis 16, wobei die Spannung, die von dem Permanentmagnet-Turbogenerator/Motor geliefert wird, eine Nutzfrequenz -Spannung ist.

18. Steuerung nach Anspruch 13, wobei das Verbindungsmittel (4 6, 53) durch den Umrichter (49) eine elektrische Leistung mit dem Permanentmagnet - Turbogenerator/Motor zum Antreiben des Permanentmagnet-Turbogenerators/Motors als einen Motor verbindet, um einen Gasturbinenmotor (13) des Permanentmagnet-Turbogenerators/Motors zu beschleunigen;
das Mittel zum Rekonfigurieren des Umrichters eine Gleichrichterbrücke (54) umfasst, die mit dem Umrichter und dem Permanentmagnet -Turbogenerator/Motor zum Rekonfigurieren des Umrichters betrieblich in Verbindung steht, um die Nutzfrequenz-Spannung zu liefern; und ferner umfassend
Mittel (44, 60, 62) zum Bereitstellen von Funken und Kraftstoff zu dem Gasturbinenmotor während der Beschleunigung, um den selbständigen Betrieb des Gasturbinenmotors zu erreichen; und
Mittel zum Verbinden des Umrichters mit dem Permanentmagnet-Turbogenerator/Motor durch die Gleichrichterbrücke.

19. Steuerung nach Anspruch 13, wobei:
der Umrichter ein Umrichter (49) mit modulierter Impulsbreite ist, der mehrere Festkörper -Schaltungskanäle aufweist;
das Verbindungsmittel einen ersten Schaltschütz (46) umfasst, der mit dem Umrichter betrieblich in Verbindung steht, und einen zweiten Schaltschütz (53), der mit dem Permanentmagnet -Turbogenerator/Motor betrieblich in Verbindung steht, wobei während der Benutzung eine elektrische Leistung zu dem Umrichter mit modulierter Impulsbreite durch den ersten Schaltschütz bereitgestellt wird, wenn dieser verschlossen ist, um den Permanentmagnet-Turbogenerator/Motor als einen Motor durch den zweiten Schaltschütz anzutreiben, wenn dieser verschlossen ist, um einen Gasturbinenmotor (13) des Permanentmagnet-Turbogenerators/Motors zu beschleunigen; und
das Mittel zum Rekonfigurieren des Umrichters eine Gleichrichterbrücke (54) umfasst, die betrieblich mit dem Umrichter und dem Permanentmagnet -Turbogenerator/Motor zum Rekonfigurieren des Umrichters in Verbindung steht, um eine Nutzfrequenz -Spannung zu liefern; und ferner umfassend Mittel zum Öffnen des ersten und des zweiten Schaltschützes, um die elektrische Leistung von dem Permanentmagnet -Turbogenerator/Motor abzutrennen, sobald der selbständige Betrieb erreicht wird;
Mittel (44, 60, 62) zum Bereitstellen von Funken und Kraftstoff zu dem Gasturbinenmotor während der Beschleunigung, um den selbständige n Betrieb des Gasturbinenmotors zu erreichen;
einen dritten Schreibschütz (52), der betrieblich mit dem Umrichter in Verbindung steht;
Mittel zum Verbinden des Umrichters mit dem Permanentmagnet-Turbogenerator/Motor durch eine Gleichrichterbrücke (54) zum Rekonfigurieren des Umrichters; und
Mittel zum Verbinden des rekonfigurierten Umrichters zum Liefern einer Nutzfrequenz -Spannung zu einer Ladung durch den dritten Schaltschütz, wenn dieser verschlossen ist.

20. Steuerung nach Anspruch 19, wobei die Anzahl der Festkörper-Schaltungskanäle in dem Umrichter vier ist und drei der vier Festkörper -Schaltungskanäle rekonfiguriert werden, um eine Nutzfrequenz -Spannung zu liefern und der vierte Festkörper -Schaltungskanal bei einem fünfzigprozentigen Arbeit szyklus geschaltet wird, um einen künstlichen Nullleiter zu schaffen.

21. Steuerung nach Anspruch 20, wobei die vier Festkörper-Schaltungskanäle IGBT-Kanäle sind.

22. Steuerung nach Anspruch 19, 20 oder 21, wobei die Gleichrichterbrücke (54) ein Dreipha sen-Gleichrichter ist, der drei Diodenkanäle aufweist.

23. Steuerung nach Anspruch 22, wobei jeder der drei Diodenkanäle ein Paar Dioden aufweist.

24. Steuerung nach einem der Ansprüche 13 bis 23, ferner umfassend ein Energiespeicher - und Abgabesystem (69) für den Umrichter zum Bereitstellen elektrischer Energie zu dem Umrichter, wenn die elektrische Nutzleistung nicht verfügbar ist, um den Permanentmagnet - Turbogenerator/Motor anzulassen, und/oder während des selbständigen Betriebs, wenn der Umrichter einer sofortigen Ladungsanforderung nicht entsprechen kann, und/oder nach dem Abschalten zum Fortfahren mit dem Durchdrehen des Gasturbinenmotors (13) des Permanent - magnet-Turbogenerators/Motors, um den Permanentmagnet-Turbogenerator/Motor abzukühlen oder die elektrische Energie während des selbständigen Betriebs anderweitig zu speichern.

## Revendications

1. Procédé pour commander un turbogénérateur/moteur électrique à aimant permanent, comprenant les étapes consistant à :
fournir du courant électrique au turbogénérateur/moteur électrique à aimant permanent (10) par l'intermédiaire un onduleur (49) pour le démarrer afin d'atteindre un fonctionnement auto-entretenu ;
déconnecter l'onduleur du courant électrique une fois que le fonctionnement auto-entretenu est atteint ;
**caractérisé par** :
une reconfiguration de l'onduleur pour fournir une tension à partir du turbogénérateur/moteur électrique à aimant permanent après ladite étape de déconnexion de l'onduleur du courant électrique.

2. Procédé selon la revendication 1, dans lequel la tension fournie à partir du turbogénérateur/moteur électrique à aimant permanent est une tension de fréquence de service.

3. Procédé selon la revendication 1, dans lequel le courant électrique fourni au turbogénérateur/moteur électrique à aimant permanent (10) par l'intermédiaire de l'onduleur (49) entraîne ce dernier comme moteur électrique afin d'accélérer le moteur de turbine à gaz (13) du turbogénérateur/moteur électrique à aimant permanent ;
une étincelle et du combustible sont fournis au moteur de turbine à gaz pendant cette accélération pour atteindre ledit fonctionnement auto-entretenu ; et
l'onduleur est reconnecté au turbogénérateur/moteur électrique à aimant permanent par l'intermédiaire d'un redresseur en pont (54) pour reconfigurer l'onduleur afin de fournir ladite tension sous forme de tension de fréquence de service.

4. Procédé selon la revendication 1, dans lequel le courant électrique fourni au turbogénérateur/moteur électrique à aimant permanent (10) par l'intermédiaire de l'onduleur (49) est fourni à ce dernier par l'intermédiaire d'un premier contacteur (46), et de l'onduleur (49) par l'intermédiaire d'un deuxième contacteur (53), afin d'accélérer le moteur de turbine à gaz (13) du turbogénérateur/moteur électrique à aimant permanent ;
une étincelle et du combustible sont fournis au moteur de turbine à gaz pendant cette accélération pour atteindre ledit fonctionnement auto-entretenu ;
l'ondulateur est déconnecté du courant électrique une fois que le fonctionnement auto-entretenu est atteint, par l'ouverture des premier et deuxième contacteurs (46, 53) ; et
l'onduleur est reconnecté au turbogénérateur/moteur électrique à aimant permanent par l'intermédiaire d'un redresseur en pont (54) pour le reconfigurer afin de fournir ladite tension sous forme de tension de fréquence de service.

5. Procédé selon la revendication 4, comprenant en outre l'étape consistant à connecter l'onduleur reconfiguré (49) à une charge par la fermeture d'un troisième contacteur (52).

6. Procédé selon la revendication 1, dans lequel l'onduleur est un onduleur modulé en largeur d'impulsion à canaux de dispositif de commutation à l'état solide multiples (49), et le courant électrique fourni au turbogénérateur/moteur électrique à aimant permanent (10) par l'intermédiaire de l'onduleur est fourni à l'onduleur par l'intermédiaire d'un premier contacteur (46), et de l'onduleur (49) par l'intermédiaire d'un deuxième contacteur (53) pour entraîner le turbogénérateur/moteur électrique à aimant permanent comme moteur électrique, afin d'accélérer le moteur de turbine à gaz du turbogénérateur/moteur électrique à aimant permanent ;
une étincelle et du combustible sont fournis au moteur de turbine à gaz pendant cette accélération pour atteindre ledit fonctionnement auto-entretenu ;
l'ondulateur est déconnecté du courant électrique une fois que le fonctionnement auto-entretenu est atteint par l'ouverture des premier et deuxième contacteurs (46, 33) ; et
l'onduleur est reconnecté au turbogénérateur/moteur électrique à aimant permanent par l'intermédiaire d'un redresseur en pont haute fréquence (54) pour le reconfigurer ; et
comprenant en outre l'étape consistant à connecter l'onduleur reconfiguré à un courant de service par la fermeture d'un troisième contacteur (52).

7. Procédé selon la revendication 6, dans lequel le nombre de canaux de dispositif de commutation à l'état solide multiples dans ledit onduleur modulé en largeur d'impulsion (49) est égal à quatre, trois des quatre canaux de dispositif de commutation à l'état solide étant reconfigurés pour fournir une tension de fréquence de service, et le quatrième canal de dispositif de commutation à l'état solide est commuté sur un mode de service de cinquante pour-cent pour créer un neutre artificiel.

8. Procédé selon la revendication 7, dans lequel les quatre canaux de dispositif de commutation à l'état solide sont des canaux IGBT.

9. Procédé selon la revendication 6, 7 ou 8, dans lequel le redresseur en pont haute fréquence (54) est un redresseur triphasé comportant trois canaux à diodes.

10. Procédé selon la revendication 9, dans lequel chacun desdits trois canaux à diodes inclut deux diodes.

11. Procédé selon l'une quelconque des revendications 1 à 5, dans lequel ledit onduleur est un onduleur modulé en largeur d'impulsion (49).

12. Procédé selon l'une quelconque des revendications précédentes, comprenant en outre l'étape consistant à fournir de l'énergie électrique à l'onduleur à partir d'un système de stockage et de décharge d'énergie (69), lorsque le courant électrique de service n'est pas disponible pour démarrer le turbogénérateur/moteur électrique à aimant permanent, et/ou pendant un fonctionnement auto-entretenu lorsque l'onduleur ne peut pas satisfaire à une exigence de charge instantanée, et/ou après la coupure pour continuer de surveiller le moteur de turbine à gaz (13) du turbogénérateur/moteur électrique à aimant permanent afin de refroidir ce dernier et/ou sinon pour stocker de l'énergie électrique pendant un fonctionnement auto-entretenu.

13. Dispositif de commande (40) pour un turbogénérateur/moteur électrique à aimant permanent, comprenant :
un onduleur (49) associé fonctionnellement audit turbogénérateur/moteur électrique à aimant permanent ; et
des moyens de connexion (46, 53) pour connecter sélectivement ledit turbogénérateur/moteur électrique à aimant permanent au courant électrique par l'intermédiaire dudit onduleur, afin de démarrer ledit turbogénérateur/moteur électrique à aimant permanent pour atteindre un fonctionnement auto-entretenu ; **caractérisé par**
des moyens (54) pour reconfigurer ledit onduleur afin de fournir une tension à partir dudit turbogénérateur/moteur électrique à aimant permanent lorsqu'en utilisation lesdits moyens de connexion ont déconnecté l'onduleur du courant électrique.

14. Commande selon la revendication 13, dans lequel ledit onduleur est un onduleur modulé en largeur d'impulsion (49) et comprend de multiples canaux de dispositif de commutation à l'état solide.

15. Dispositif de commande selon la revendication 14, dans lequel lesdits multiples canaux de dispositif de commutation à l'état solide dans ledit onduleur modulé en largeur d'impulsion (49) sont de quatre, trois des quatre canaux de dispositif de commutation à l'état solide sont reconfigurés pour fournir une tension de fréquence de service, et le quatrième canal de dispositif de commutation à l'état solide est commuté sur un mode de service de cinquante pour-cent pour créer un neutre artificiel.

16. Dispositif de commande selon la revendication 15, dans lequel Lesdits quatre canaux de dispositif de commutation à l'état solide sont des canaux TGBT.

17. Dispositif de commande selon l'une quelconque des revendications 13 à 16, dans lequel la tension fournie à partir dudit turbogénérateur/moteur électrique à aimant permanent est une tension de fréquence de service.

18. Dispositif de commande selon la revendication 13, dans lequel lesdits moyens de connexion (46, 53) connectent ledit turbogénérateur/moteur électrique à aimant permanent au courant électrique par l'intermédiaire dudit onduleur (49) pour entraîner ledit turbogénérateur/moteur électrique à aimant permanent comme moteur, afin d'accélérer un moteur de turbine à gaz (13) dudit turbogénérateur/moteur électrique à aimant permanent ;
lesdits moyens pour reconfigurer l'onduleur comprennent un redresseur en pont (54) associé fonctionnellement audit onduleur et audit turbogénérateur/moteur électrique à aimant permanent pour reconfigurer ledit onduleur, afin de fournir une tension de fréquence de service ; et comprenant en outre
des moyens (44, 60, 62) pour fournir une étincelle et du combustible audit moteur de turbine à gaz pendant ladite accélération afin d'atteindre un fonctionnement auto-entretenu dudit moteur de turbine à gaz ; et
des moyens pour connecter ledit onduleur audit turbogénérateur/moteur électrique à aimant permanent par l'intermédiaire dudit redresseur en pont.

19. Dispositif de commande selon la revendication 13, dans lequel :
l'onduleur est un onduleur modulé en largeur d'impulsion (49) comportant de multiples canaux de dispositif de commutation à l'état solide ;
lesdits moyens de connexion comprennent un premier contacteur (46) associé fonctionnellement audit onduleur, et un deuxième contacteur (53) associé fonctionnellement audit turbogénérateur/moteur électrique à aimant permanent, une énergie électrique étant fournie, en service, audit onduleur modulé en largeur d'impulsion par l'intermédiaire dudit premier contacteur, lorsqu'il est fermé, pour entraîner ledit turbogénérateur/moteur électrique à aimant permanent comme moteur par l'intermédiaire dudit deuxième contacteur, lorsqu'il est fermé, afin d'accélérer un moteur de turbine à gaz (13) dudit turbogénérateur/moteur à aimant permanent ; et
lesdits moyens pour reconfigurer ledit onduleur comprennent un redresseur en pont (54) associé fonctionnellement audit onduleur et audit turbogénérateur/moteur électrique à aimant permanent pour reconfigurer l'onduleur afin de fournir une tension de fréquence de service ; et comprenant en outre des moyens pour ouvrir lesdits premier et deuxième contacteurs afin de déconnecter ledit turbogénérateur/moteur électrique à aimant permanent du courant électrique une fois qu'un fonctionnement auto-entretenu est atteint ;
des moyens (44, 60, 62) pour fournir une étincelle et du combustible audit moteur de turbine à gaz pendant ladite accélération afin d'atteindre un fonctionnement auto-entretenu dudit moteur de turbine à gaz ;
un troisième contacteur (52) associé fonctionnellement audit onduleur ;
des moyens pour connecter ledit onduleur audit turbogénérateur/moteur électrique à aimant permanent par l'intermédiaire dudit redresseur en pont (54) pour reconfigurer audit onduleur ; et
des moyens pour connecter ledit onduleur reconfiguré afin de fournir une tension de fréquence de service vers une charge par l'intermédiaire dudit troisième contacteur lorsqu'il est fermé.

20. Dispositif de commande selon la revendication 19, dans lequel le nombre de canaux de dispositif de commutation à l'état solide dans ledit onduleur est égal à quatre, trois des quatre canaux de dispositif de commutation à l'état solide sont reconfigurés pour fournir une tension de fréquence de service, et le quatrième canal de dispositif de commutation à l'état solide est commuté sur un mode de service de cinquante pour-cent pour créer un neutre artificiel.

21. Dispositif de commande selon la revendication 20, dans lequel les quatre canaux de dispositif de commutation à l'état solide sont des canaux IGBT.

22. Dispositif de commande selon la revendication 19, 20 ou 21, dans lequel ledit redresseur en pont (54) est un redresseur triphasé comportant trois canaux à diodes.

23. Dispositif de commande selon la revendication 22, dans lequel chacun desdits trois canaux à diodes inclut deux diodes.

24. Dispositif de commande selon l'une quelconque des revendications 13 à 23, comprenant en outre un système de stockage et de décharge d'énergie (69) destiné à l'onduleur pour fournir de l'énergie électrique à ce dernier lorsque le courant électrique de service n'est pas disponible pour démarrer le turbogénérateur/moteur électrique à aimant permanent, et/ou pendant un fonctionnement auto-entretenu lorsque l'onduleur ne peut pas satisfaire à une exigence de charge instantanée, et/ou après la coupure pour continuer de surveiller le moteur de turbine à gaz du turbogénérateur/moteur électrique à aimant permanent afin de refroidir ce dernier et/ou sinon pour stocker de l'énergie électrique pendant un fonctionnement auto-entretenu.
